# EUROPÄISCHE PATENTSCHRIFT

(11) **EP 4 308 493 B1**
(45) Veröffentlichungstag und Bekanntmachung des Hinweises auf die Patenterteilung: **19.03.2025**
(21) Anmeldenummer: 21734051.2
(22) Anmeldetag: 02.06.2021
(51) Int. Cl.: G01D 5/347, B66B 1/34

(54) **MESSBAND FÜR AUFZUGSANLAGE**
GUIDE UNIT AND ADAPTER DEVICE AND SENSOR UNIT FOR AN ELEVATOR INSTALLATION
UNITÉ DE GUIDAGE ET DISPOSITIF ADAPTATEUR, AINSI QU'UNITÉ DE CAPTEUR POUR UNE INSTALLATION D'ASCENSEUR

(30) Priorität: 18.03.2021 EP 21163536
(43) Veröffentlichungstag der Anmeldung: 24.01.2024
(73) Patentinhaber: Grimm, Felix, 78239 Rielasingen (DE)
(72) Erfinder: ROHR, Stephan, 9495 Triesen (LI); JANESCH, Stephan, 8524 Buch bei Frauenfeld (CH); HOYER, Jörn, 14979 Grossbeeren (DE); STUDER, Daniel, 8197 Rafz (CH); FOELIX, Roberto, 8200 Schaffhausen (CH)
(74) Vertreter: Patent- und Rechtsanwälte Behrmann Wagner PartG mbB
(86) Internationale Anmeldenummer: PCT/EP2021/064776
(87) Internationale Veröffentlichungsnummer: WO 2022/194396

(56) Entgegenhaltungen:
- EP-A1- 3 736 540
- DE-A1- 4 401 977
- DE-U1- 202011 051 666
- US-A- 5 925 859

## Beschreibung

Die vorliegende Erfindung betrifft ein Messband aufweisend eine Positionskodierung zur Bestimmung einer Fahrkorbposition in einem Aufzugsschacht, sowie ein Messsystem aufweisend das Messband und eine zugehörige Sensoranordnung.

Vorrichtungen zur Positionserkennung eines Fahrkorbs einer Aufzugsanlage sind aus dem Stand der Technik bereits bekannt. Diese dienen der Bereitstellung von Informationen über die aktuelle Position des Fahrkorbs entlang des Aufzugsschachts bzw. der zugehörigen Aufzugsschienen im Schacht. Neben einfachen Positionsgebern wie beispielsweise Schachtschaltern, welche über eine aktuelle Fahrkorbposition an vordefinierten Stellen im Aufzugsschacht Rückmeldung geben, existieren auch inkrementelle Positionsgeber, welche an jeder Stelle im Schacht eine genaue Positionsbestimmung ermöglichen.

Die EP 3 231 753 lehrt beispielsweise eine Aufzugsanlage mit einem im Aufzugsschacht angeordneten Messband zur Positionsbestimmung des Fahrkorbs im Aufzugsschacht. Das Messband weist eine optische Kodierung in Form von aufeinanderfolgenden Positionsmustern, insbesondere 2D-Codes, zur Längenmessung auf. Am Fahrkorb ist eine Sensoreinrichtung befestigt, die eine Beleuchtungsquelle und einen Sensor umfasst, welche ein Detektionsfeld zum Detektieren des Messbandes und Auswerten einer entsprechenden Fahrkorbposition umfasst. Ein derartiges Messband ist üblicherweise als Stahlband ausgeführt, an welchem der optische Code aufgedruckt und mit einer Kunststoffschicht umschlossen ist.

Die Firma Fritz Kübler GmbH vertreibt ein System zur Positionserkennung eines Fahrkorbs in einem Aufzugsschacht, in welchem ein gelochtes Stahlband mittels eines am Fahrkorb angeordneten optischen Sensors abgetastet wird. Das Stahlband weist eine Positionskodierung in der Form von Bohrungen und/oder Langlöchern auf, welches mit Hilfe einer Lichtschranke berührungslos abgetastet wird.

Derartige optische Systeme weisen jedoch den Nachteil einer erhöhten Störanfälligkeit bei einer in die Mechanik des Aufzugssystems eintretenden Verschmutzung auf.

Ebenfalls bekannt sind auf magnetischer Beeinflussung basierende Systeme, in welchen das Messband ins Band eingebrachte permanentmagnetische Abschnitte zur Bereitstellung einer Positionskodierung aufweist, welche durch wenigstens einen Magnetfeldsensor der mit dem Messband zusammenwirkenden Sensoranordnung auslesbar ist.

Die DE 10 2009 054 337 A1 zeigt eine solche auf magnetischer Beeinflussung beruhende Vorrichtung zur Längen- und/oder Positionserfassung des Fahrkorbs einer Aufzugsanlage, wobei eine Sensoranordnung in einem Trägerkörper an dem Fahrkorb befestigt ist, um mit einem am Aufzugsschacht längserstreckend befestigten Messband bzw. Magnetbandeinheit umfassend einen Längsstreifen aus einem magnetischen Material zur Positionserfassung zusammenzuwirken. Durch eine kodierte Permanentmagnetisierung des Messbands bzw. der Magnetbandeinheit lässt sich mittels der Sensoranordnung, insbesondere mit Magnetfeldsensoren, die Position des Fahrkorbs relativ zu dem Aufzugschacht bestimmen. Die Sensoranordnung weist weiterhin in einem Gehäuse eine Ausnehmung oder einen Führungsschlitz zur Aufnahme und beweglichen Führung des Messbands bzw. der Magnetbandeinheit auf. Bei derartigen magnetischen Systemen mit einem permanentmagnetisierten Messband bzw. Magnetbandeinheit kann es ebenfalls zu einer erhöhten Störanfälligkeit bei einer in die Mechanik des Aufzugssystems eintretenden Verschmutzung kommen, insbesondere bei einer Ablagerung von metallischen Partikeln auf den permanentmagnetischen Bereichen des Messbands, welche die Auslesung durch die zugeordnete Sensoranordnung beeinträchtigen können.

Die EP 3 736 540 A1 offenbart ein Messsystem aufweisend ein Messband aus ferromagnetischem Material, eine einer Sensorvorrichtung zugeordnete Magnetisierungseinheit zur Bereitstellung eines temporären Magnetfelds und eine Sensoreinheit wie beispielsweise ein Hall-Sensor zur Abtastung des Magnetfelds. Das Messband weist das temporäre Magnetfeld beeinflussende Ausbrüche bzw. Öffnungen auf, welche ein Kodierungsmuster ausbilden, das durch die Sensorvorrichtung auslesbar ist. Die hieraus bekannten Messbandausführungen weisen entweder hinsichtlich der Signalauswertung erhöhte Anforderungen auf, wodurch sich insbesondere eine geringere Ablesetoleranz und somit erhöhte Anforderungen hinsichtlich einer präzisen Anordnung relativ zu einer zugeordneten Sensorvorrichtung ergeben, und/oder eine aus fertigungstechnischer Sicht relativ aufwendige Ausbildung auf.

Basierend auf dem genannten Stand der Technik liegt der vorliegenden Erfindung die Aufgabe zugrunde, ein verbessertes Messband und eine zugehörige Sensorvorrichtung bereitzustellen, welche die oben genannten Nachteile des Standes der Technik überwinden oder zumindest deutlich abschwächen. Hierbei soll neben einer zuverlässigen Erfassung der Fahrkorbposition im Aufzugsschacht eine vereinfachte Auslesbarkeit und/oder verbesserte Toleranz hinsichtlich der Signalauswertung der Positionskodierung ermöglicht werden. Gleichzeitig soll ein möglichst einfaches und kostengünstiges Messband und zugehörige Sensorvorrichtung bereitstellbar sein. Diese Aufgabe wird durch die Gegenstände der unabhängigen Ansprüche gelöst. Die Unteransprüche stellen vorteilhafte Weiterbildungen der vorliegenden Erfindung dar. Die Erfindung adressiert zudem weitere Probleme, welche in der nachfolgenden Beschreibung erläutert sind.

In einem ersten Aspekt betrifft die Erfindung ein Messband zur Bestimmung der Position eines Fahrkorbs in einem Aufzugschacht, welches vertikal im Aufzugschacht und vorzugsweise sich über wenigstens zwei Gebäudestockwerke erstreckend anordenbar ist, aufweisend einen bandförmigen Grundkörper aus ferromagnetischem Material und eine darin eingebrachte und mittels eines Magnetfeldsensors auslesbare Positionskodierung, wobei die Positionskodierung durch beidseits einer Längsachse des Messbands, vorzugsweise alternierend angeordnete und im Wesentlichen in Messbandlängsrichtung verlaufende Ausbrüche im Messbandgrundkörper gebildet ist, wobei die jeweiligen Ausbrüche eine, zwischen zwei der Längsachse zugewandten Endabschnitten der Ausbrüche ausgebildete, konkav gebogene oder geknickte Innenkontur aufweisen.

Unter Innenkontur wird vorliegend die der Längsachse zugewandte Kontur einer Innenwand des Ausbruchs in Draufsicht auf eine Messbandoberfläche verstanden. Unter Ausbruch wird ein vorzugsweise senkrecht zur Messbandoberfläche verlaufender Materialausbruch oder Öffnung verstanden. Die den Ausbruch begrenzenden Innenwände sind hierbei vorzugsweise senkrecht zur Messbandoberfläche angeordnet und bilden in der Messbandoberfläche eine Kontur des Materialausbruchs aus.

Unter konkaver Innenkontur wird eine Kontur verstanden, welche ausgehend von den der Mittelachse näher zugewandten Endabschnitten einen zwischen den Endabschnitten liegenden und hin zu einem Messbandaußenrand gebogene oder geknickte Form aufweist. Unter geknickter Form wird insbesondere eine dreieckig-förmig geknickte bzw. im Wesentlichen dreieckförmig ausgebildete Form verstanden.

Durch die erfindungsgemäß ausgebildeten Ausbrüche wird eine optimierte Magnetflussführung im Metallband und insbesondere eine optimierte Magnetflusslinienführung an den jeweiligen Ausbrüchen bei einer temporären Magnetisierung des Metallbands unter Relativbewegung in Längsrichtung erzielt, welche durch eine zugeordnete Sensorvorrichtung gegenüber dem Stand der Technik, aufweisend eine parallel zur Messbandlängsrichtung verlaufende Innenkontur, optimiert auslesbar ist. Hierdurch ist unter anderem eine präzisere Positionsbestimmung und eine erhöhte Toleranz hinsichtlich der Relativanordnung von Sensorvorrichtung und Messband erzielbar.

In einer bevorzugten Ausführungsform sind jeweils in Messbandlängsrichtung aufeinanderfolgende Ausbrüche derart im Messbandgrundkörper angeordnet, dass eine Distanz zwischen sich gegenüberliegenden Endabschnitten der aufeinanderfolgenden Ausbrüche geringer ist, als eine maximale Breite der jeweiligen Ausbrüche in Messbandquerrichtung

Unter der Distanz zwischen sich gegenüberliegenden Endabschnitten wird vorliegend die kürzeste Entfernung der sich gegenüberliegenden und insbesondere einander zugewandten Endabschnitte zweier benachbarter bzw. in Messbandlängsrichtung aufeinanderfolgender Ausbrüche verstanden. Unter maximaler Breite der jeweiligen Ausbrüche wird die maximale Breitenerstreckung zwischen einer Innenkontur bzw. Innenwand des jeweiligen Ausbruchs und einer gegenüberliegenden Außenkontur bzw. Außenwand des Ausbruchs in Messbandquerrichtung verstanden. Die Messbandquerrichtung verläuft im Wesentlichen senkrecht zu Messbandlängsachse.

Diese Ausbildung, gemäß welcher jeweils in Messbandlängsrichtung aufeinanderfolgende bzw. benachbarte Ausbrüche derart im Messbandgrundkörper angeordnet sind, dass eine Distanz zwischen sich gegenüberliegenden Endabschnitten der aufeinanderfolgenden Ausbrüche geringer ist, als eine maximale Breite der jeweiligen Ausbrüche führt zu einer Reduktion eines magnetischen Durchflussquerschnitts des Messbandgrundkörpers zwischen den sich gegenüberliegenden Endabschnitten bzw. zwischen jeweils benachbart angeordneten Ausbrüchen im Messband, vorteilhaft ohne das Vorsehen zusätzlicher Öffnungen oder Ausbrüche im Messbandgrundkörper und insbesondere zwischen den jeweils benachbart angeordneten Ausbrüchen. Durch diese Ausbildung kann der Magnetfluss im Metallband weiter optimiert werden und insbesondere eine optimierte Magnetflussführung über die jeweiligen Ausbrüche unterstützt werden. Weiterhin können die Fertigungskosten für das Messband deutlich reduziert werden, da keine zusätzlichen Flusswiderstandsmittel beispielsweise in Form von die Sensorvorrichtung möglicherweise negativ beeinflussenden, zusätzlichen Ausbrüchen oder Öffnungen im Messband ausgebildet werden.

Das erfindungsgemäße Messband besteht aus einem bandartigen Metallbandgrundkörper mit konstanter Breite und zwei sich senkrecht gegenüberliegenden Oberflächen, in welchem die Ausbrüche durchgehend angeordnet sind. Die Ausbrüche bzw. Öffnung im Messband sind vorzugsweise durch Stanzen oder Laserschneiden herstellbar. Die jeweiligen Endabschnitte der Ausbrüche weisen vorzugsweise verrundete Ecken auf. Das Messband weist vorzugsweise eine Materialstärke bzw. Dicke von 0,15 bis 3 mm, bevorzug von 0,2 bis 1 mm, weiterhin bevorzugt von 0,2 bis 0,6 mm auf. Die Messbandbreite beträgt vorzugsweise 6 bis 25 mm, weiterhin bevorzugt 8 bis 14 mm und besonders bevorzugt ca. 10 mm. Die Länge des Messbands ist auf den jeweiligen Aufzugsschacht angepasst, in welchem dieser angeordnet werden soll. Beispielhaft kann dies für ein fünfstöckiges Gebäude eine Länge von circa 15m aufweisen.

Eine maximale Breite der jeweiligen Ausbrüche gemäß der Erfindung liegt vorzugsweise bei 2 bis 5, mehr bevorzugt bei 2 bis 3,5 mm. Eine minimale Breite der jeweiligen Ausbrüche liegt vorzugsweise bei 1 bis 3, mehr bevorzugt bei 1 bis 2 mm.

Eine Längserstreckung der jeweiligen Ausbrüche liegt vorzugsweise bei 5 bis 16mm, mehr bevorzugt bei 6 bis 13 mm, weiterhin bevorzugt bei 6 bis 9 mm. Ein Ausbruch mit einer doppelten Länge für die Darstellung eines Doppelbits der Positionskodierung kann hierbei vorzugsweise eine entsprechende doppelte Länge aufweisen.

Eine Distanz zwischen sich jeweils gegenüberliegenden Endabschnitten der aufeinanderfolgenden Ausbrüche liegt vorzugsweise zwischen 0,3 und 1,8, mehr bevorzugt zwischen 0,3 und 1,2 mm und weiter bevorzugt zwischen 0,3 und 1 mm.

Die Messbandlängsachse ist vorzugsweise eine Mittelachse des Messbands, welche parallel zur Messbandlängsrichtung verläuft.

Unter im Wesentlichen in Messbandlängsrichtung verlaufende Ausbrüche wird verstanden, dass die Ausbrüche eine grundsätzliche Erstreckungsrichtung in Messbandlängsrichtung aufweisen und insbesondere nicht senkrecht oder annähernd senkrecht zur Messbandlängsrichtung verlaufen.

In einer bevorzugten Ausführungsform ist die Innenkontur, weiterhin bevorzugt wenigstens ein Mittelbereich der Innenkontur, vorzugsweise frei von Konturabschnitten, welche parallel zur Längsrichtung des Messbands verlaufen. In anderen Worten weist die Innenkontur lediglich gebogene oder gegenüber der Messbandlängsachse schräg bzw. gewinkelt angeordnete Abschnitte auf.

Weiterhin bevorzugt ist die Innenkontur frei von Konturabschnitten, welche senkrecht oder annähernd senkrecht zur Messbandlängsrichtung verlaufen. Hierdurch kann insbesondere ein ungewollter Abriss der Magnetflussführung über den jeweiligen Ausbruch bei Relativbewegung von Messband und zugeordneter Sensorvorrichtung und somit ein Signalabriss beim Auslesen der Positionskodierung verhindert werden.

In einer bevorzugten Ausführungsform ist die Innenkontur eines jeweiligen Ausbruchs derart ausgebildet, dass diese gegenüber der Messbandlängsachse in Draufsicht auf das Messband in einem positiven oder negativen Winkel bzw. Steigungswinkel von weniger als 55°, weiterhin bevorzugt von weniger als 45° angeordnet ist bzw. verläuft. Dies bedeutet bei einer konkav geknickten Kontur, dass die jeweiligen Seitenlinien der geknickten Kontur einen Winkel mit der Messbandlängsachse von jeweils weniger als 55°, mehr bevorzugt von weniger als 45° einschließen bzw. ausbilden. Bei der konkav gebogenen Kontur bedeutet dies, dass eine Tangente der Kontur bzw. eine Tangente der Konturlinie einen maximalen Winkel von weniger als 55°, mehr bevorzugt von weniger als 45° gegenüber der Messbandlängsachse einschließt bzw. ausbildet. Hierdurch kann die Signalabtastung beim Auslesen der Positionskodierung zusätzlich optimiert werden.

In einer weiter bevorzugten Ausführungsform ist eine Distanz zwischen sich gegenüberliegenden Endabschnitten der aufeinanderfolgenden Ausbrüche geringer, als einen minimale Breite der jeweiligen Ausbrüche in Messbandquerrichtung. Hierunter wird die minimale Breitenerstreckung in Messbandquerrichtung zwischen der Innenkontur und einer gegenüberliegenden Außenkontur verstanden. Durch diese Anordnung kann ein Magnetflusswiderstand im Messbandgrundkörper zwischen jeweils gegenüberliegenden Endabschnitten bzw. benachbarten Ausbrüchen zusätzlich erhöht und eine Magnetflussführung über die jeweiligen Ausbrüche weiter optimiert werden.

In einer bevorzugten Ausführungsform sind die in Messbandlängsrichtung aufeinanderfolgenden Ausbrüche auf gegenüberliegenden Seiten der Längsachse und zueinander in Längsrichtung versetzt angeordnet. Die Ausbrüche des Messbands sind weiterhin bevorzugt bezüglich der Messbandlängsachse alternierend angeordnet. Weiterhin bevorzugt umfasst die Positionskodierung eine Vielzahl erster und zweiter Ausbrüche, welche eine gleichartige geometrische Grundform bzw. Grundkontur aufweisen und welche sich lediglich in Ihrer Ausdehnung in Messbandlängsrichtung unterscheiden. Die ersten und zweiten Ausbrüche sind hierbei vorzugsweise zur Ausbildung eines Einzel- oder Doppelbits der Positionskodierung ausgebildet.

Die jeweils in Messbandlängsrichtung aufeinanderfolgenden Ausbrüche sind vorteilhaft derart angeordnet, dass sich die gegenüberliegenden Endabschnitte der aufeinanderfolgenden Ausbrüche in Messbandquerrichtung wenigstens teilweise überlappen. Hierdurch kann ein Magnetflusswiderstand im Messbandgrundkörper zwischen den gegenüberliegenden Endabschnitten benachbarter bzw. gegenüberliegender Ausschnitte erhöht werden und somit die Magnetflussführung über die Ausbrüche zur Signalauswertung bzw. Signalabtastung zusätzlich optimiert werden.

Die jeweiligen Ausbrüche weisen weiterhin bevorzugt eine zwischen den zwei Endabschnitten der Ausbrüche ausgebildete und einem Messbandaußenrand zugewandte Außenkontur auf, welche im Wesentlichen parallel zur Innenkontur oder parallel zur Messbandlängsachse ausgebildet ist.

In einer bevorzugten Ausführungsform ist die Innenkontur in einem zwischen den Endabschnitten liegenden Mittelabschnitt weg von der Mittelachse zu einem Außenrand bzw. zu einer Seite des Messbands gebogen oder geknickt ausgebildet. Die jeweilige Innenkontur bildet weiter bevorzugt eine vorzugsweise mittig in der Kontur angeordnete Verjüngung der Breite des jeweiligen Ausbruchs aus. Hierdurch wird eine weitere Optimierung der Signalauswertung bzw. Signalabtastung an den jeweiligen Ausbrüchen erzielt. Insbesondere kann hierdurch eine Flusskonzentration bzw. Flusszunahme hin zum Mittelabschnitt erzielt werden, wodurch der Magnetfluss insbesondere am im Mittelabschnitt auftretenden Signalscheitelpunkt präzisier und zuverlässiger ausgelesen werden kann.

Weiterhin bevorzugt weisen die jeweiligen Ausbrüche eine Kontur auf, welche spiegelsymmetrisch zu einer vorzugsweise zur Messbandquerrichtung parallel angeordneten Symmetrieachse der jeweiligen Ausbrüche ausgebildet ist. Hierdurch wird eine weiter optimierte Signalabtastung und insbesondere eine für beide Relativbewegungen von Messband und zugeordneter Sensoranordnung in Längsrichtung des Messbands gleichwertig präzise Signalabtastung ermöglicht.

In einer bevorzugten Ausführungsform weist das Messband außer den die Positionskodierung bildenden Ausbrüchen keine zusätzlichen Ausbrüche oder Öffnungen, insbesondere zwischen jeweils zwei in Messbandlängsrichtung aufeinanderfolgenden Ausbrüchen auf.

Das Messband ist vorzugsweise aus ferromagnetischem Material, insbesondere Stahl oder Eisen gebildet, welches beim Zusammenwirken mit Magnetisierungsmittel temporär magnetisierbar ist. Das Messband weist insbesondere einen bandförmigen Grundkörper aus ferromagnetischem Material auf. Das Messband ist vorzugsweise frei von permanentmagnetisierten Bereichen, insbesondere frei von einer permanentmagnetisierten Positionskodierung.

Die erfindungsgemäße Positionskodierung aufweisend eine Vielzahl von Ausbrüchen im Messband ist vorzugsweise derart ausgebildet, dass diese bei externer Anregung mittels einem oder mehreren vorzugsweise seitlich des Messbands angeordneten Permanentmagneten ein temporäres und durch den Magnetfeldsensor auslesbares oder abtastbares Magnetfeld ausbildet.

Die die Positionskodierung bildenden Ausbrüche sind hierbei vorzugsweise in einer ersten und einer zweiten Spur bzw. auf einer ersten und zweiten Seite angeordnet, welche durch die Längsachse des Messbands getrennt voneinander angeordnet sind. Die Ausbrüche auf der ersten Spur können aufgrund einer andersartigen Magnetflusserzeugung in Zusammenwirkung mit Magnetfelderzeugungsmitteln einer Sensoranordnung von den Ausbrüchen auf der zweiten Spur durch den Magnetfeldsensor der Sensoranordnung unterschieden werden. Ebenso kann der Magnetfeldsensor wenigstens zwischen Ausbrüchen unterscheiden, welche aufgrund ihrer unterschiedlichen Längserstreckung Einzel- oder Doppelbits der Positionskodierung aufweisen. Die auslesbare oder abtastbare Positionskodierung kann hierbei beispielsweise eine inkrementelle, eine sequentielle oder eine absolute kodierte Positionskodierung bereitstellen.

In einem weiteren Aspekt betrifft die vorliegende Erfindung ein Messsystem aufweisend ein Messband wie zuvor beschrieben und eine relativ zum Messband bewegliche Sensoranordnung zum Auslesen der Positionskodierung des Messbands mittels wenigstens eines Magnetfeldsensors, wobei die Sensoranordnung vorzugsweise seitlich des Messbands angeordnete Magnetfelderzeugungsmittel zur temporären Magnetisierung des Messbands aufweist, und wobei der Magnetfeldsensor zum Auslesen des dabei erzeugten temporären Magnetfelds ausgebildet ist.

Die Sensoranordnung ist dabei zur positionsfesten Anordnung an einem Fahrkorb eines Aufzugssystems vorgesehen bzw. ausgebildet. Der Fahrkorb mit daran befestigter Sensoranordnung fährt hierbei entlang des Messbands im Aufzugsschacht, wobei durch das Zusammenwirken von Messband und zugeordneter Sensoranordnung eine Positionsbestimmung des Fahrkorbs im Aufzugschacht ermöglicht wird.

Die Sensoranordnung ist vorzugsweise dazu eingerichtet, die Lage, Geschwindigkeit und/oder Beschleunigung eines zugeordneten Fahrkorbs durch Auslesen des Messbands an eine übergeordnete Steuerung weiterzugeben. Dies erfolgt vorzugsweise über ein Auslesen bzw. eine Abtastung der temporär erzeugten Magnetfelder des Messbands und/oder der zwischen den jeweiligen Magnetfeldern auftretenden Feldsprünge bei Bewegung der Sensoranordnung entlang des Messbands. Die Sensoranordnung und/oder die Steuerung kann hierzu einen entsprechend konfigurierten Mikrokontroller aufweisen.

In einer bevorzugten Ausführungsform umfasst das Messsystem beidseits des Messbands angeordnete Magnetfelderzeugungsmittel, insbesondere Permanentmagnete wie beispielsweise Stabmagnete, welche eine unterschiedliche Polung aufweisen. Die Magnetfelderzeugungsmittel sind hierbei vorzugsweise in einer Ebene seitlich mit dem Messband erstreckend angeordnet. Die Magnetfelderzeugungsmittel stellen hierbei eine temporäre Magnetisierung des Messbands in dem Bereich zwischen den Magnetfelderzeugungsmitteln bereit, in welchem die gegenüberliegenden Magneten insbesondere kurzgeschlossen werden. Durch die seitliche Anordnung der Magnetfelderzeugungsmittel wird eine hinsichtlich der Signalabtastung optimierte Magnetflussführung im Messband erreicht. Insbesondere werden hierdurch Feldsprünge an den jeweiligen Ausbrüchen besser erfassbar und Signalabtastungen auf einer ersten und zweiten Spur des Messbands leichter durch eine zugeordnete Sensoranordnung unterscheidbar.

In einer bevorzugten Ausführungsform weist das Messsystem wenigstens eine dem Messband zugordnete Führungsschiene mit seitlich des Messbands angeordneten Permanentmagneten unterschiedlicher Polung auf. Die Führungsschiene kann eine vorzugsweise nutförmige Vertiefung zur Aufnahme und Führung des Messbands und daran seitlich verlaufene Führungswangen aufweisen, in welchen vorzugsweise die Permanentmagneten angeordnet sind. Die Führungsschiene ist vorzugsweise derart angeordnet, dass sich die Magneten unterschiedlicher Polung entlang gegenüberliegender Seiten in Längsrichtung des Messbands erstrecken. Die Permanentmagneten weisen vorzugsweise eine Längserstreckung über eine Länge von 30 bis 600mm, mehr bevorzugt von 40 bis 550mm auf.

Der Magnetfeldsensor des Messsystems weist wenigstens einen, vorzugsweise eine Mehrzahl von in Reihe angeordneter Hall-Sensoren auf, welche parallel zur Längsrichtung des Messbands angeordnet sind. Der wenigstens eine Magnetfeldsensor ist vorzugsweise parallel zu einer Oberfläche des Messbands angeordnet. Weiterhin bevorzugt ist der wenigstens eine Magnetfeldsensor in Draufsicht mittig oberhalb der Längsachse des Messbands ausgerichtet. Eine Mehrzahl von in Reihe angeordneter Hall-Sensoren ist vorzugsweise mittig und parallel verlaufend zur Längsachse des Messbands angeordnet.

In einem weiteren Aspekt betrifft die Erfindung ein Aufzugsystem mit einem Aufzugschacht und einem darin verfahrbar angeordneten Fahrkorb, welches ein Messsytem zur Bestimmung der Position des Fahrkorbs im Aufzugschacht wie oben beschrieben aufweist.

Weitere vorteilhafte Einzelheiten der Erfindung ergeben sich aus der nachfolgenden Beschreibung bevorzugter Ausführungsbeispiele sowie anhand der Figuren. Diese zeigen in:
- **Fig. 1**: eine schematische Seitenansicht eines bevorzugten Ausführungsbeispiels eines erfindungsgemäßen Aufzugssystems;
- **Fig. 2**: eine Aufsicht auf eine erste bevorzugte Ausführungsform des erfindungsgemäßen Messbands;
- **Fig. 3**: eine Aufsicht auf eine zweite bevorzugte Ausführungsform des erfindungsgemäßen Messbands;
- **Fig. 4**: eine Aufsicht auf eine dritte bevorzugte Ausführungsform des erfindungsgemäßen Messbands mit zugeordneten Magnetfelderzeugungsmitteln;
- **Fig. 5**: eine Aufsicht auf eine vierte bevorzugte Ausführungsform des erfindungsgemäßen Messbands mit zugeordneten Magnetfelderzeugungsmitteln;
- **Fig.6a,6b**: eine Schnittansicht einer bevorzugten Ausführungsform des erfindungsgemäßen Messsystems beim Auslesen bzw. Abtasten der Positionskodierung;
- **Fig. 7a,7b**: eine perspektivische Seitenansicht und eine Unteransicht einer Sensoranordnung zum Auslesen der Positionskodierung des Messbands;
- **Fig. 8**: eine Schnittansicht einer bevorzugten Ausführungsform des erfindungsgemäßen Messsystems bestehend aus Messband und zugeordneter Sensoranordnung;
- **Fig. 9**: eine Ausführungsform eines Messbands aus dem Stand der Technik;
- **Fig. 10**: eine Signalabbildung eines Messbands gemäß Fig. 9 aus dem Stand der Technik durch eine zugeordnete Sensoranordnung; und
- **Fig. 11a,b**: eine jeweilige Signalabbildung eines erfindungsgemäßen Messbands beispielhaft für die Ausführungsformen nach Fig. 2 und Fig. 5.

In den Figuren sind gleiche Elemente und Elemente mit der gleichen Funktion mit den gleichen Bezugszeichen versehen.

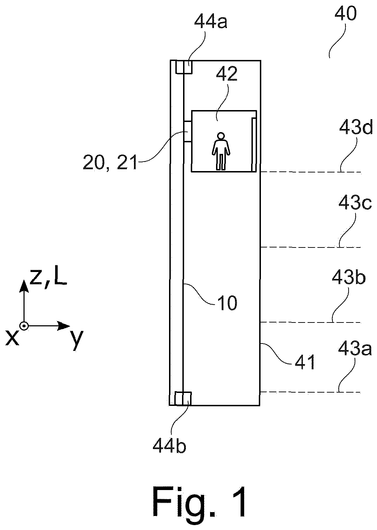

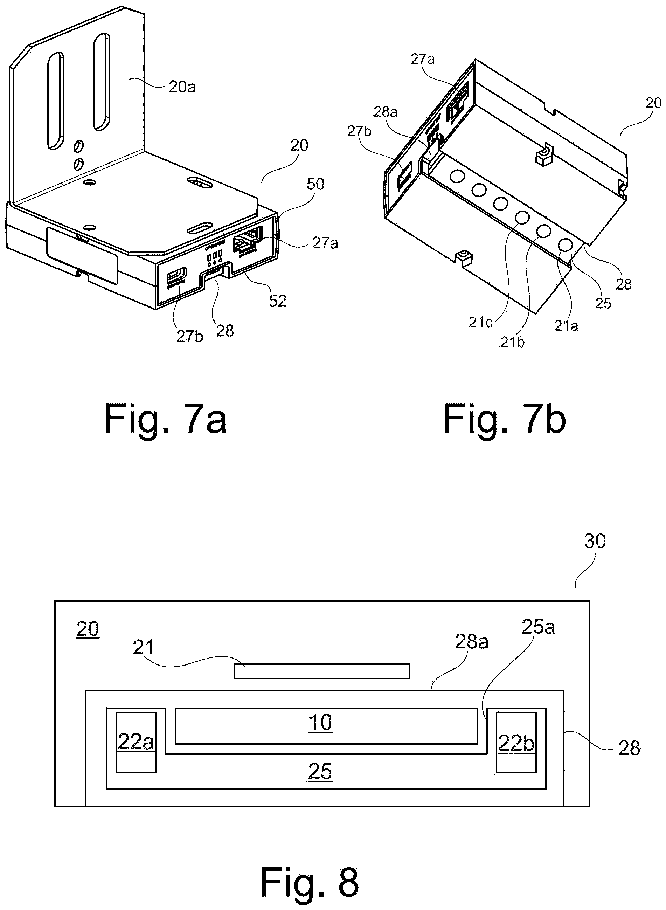

**Fig. 1** zeigt ein Aufzugssystem 40 aufweisend einen sich über mehrere Stockwerke 43a-d, beispielsweise eines Gebäudes, Schiffs, Kranauslegers oder Hochregallagers, erstreckenden Aufzugschacht 41 und einen darin verfahrbar angeordneten Fahrkorb 42. Das System weist zudem an sich bekannte Antriebsmittel (nicht gezeigt) auf, welche ein selektives Verfahren des Fahrkorbs 42 im Aufzugsschacht 41 ermöglichen. Zur Positionserkennung des Fahrkorbs im Aufzugschacht 41, weist das Aufzugssystem 40 ein unten näher beschriebenes erfindungsgemäßes Messsystem 30 (vgl. bspw. Fig. 8) auf, welches ein im Aufzugschacht 41 angeordnetes Messband 10 und eine mit diesem zusammenwirkende und am Fahrkorb 42 angeordneten Sensoranordnung 20 mit wenigstens einem Magnetfeldsensor 21 aufweist. Das Messband 10 erstreckt sich vertikal durch den gesamten Aufzugschacht 41 und ist mit Hilfe von vorgesehenen Befestigungsmittel 44a,44b im Aufzugschacht positionssicher gehalten.

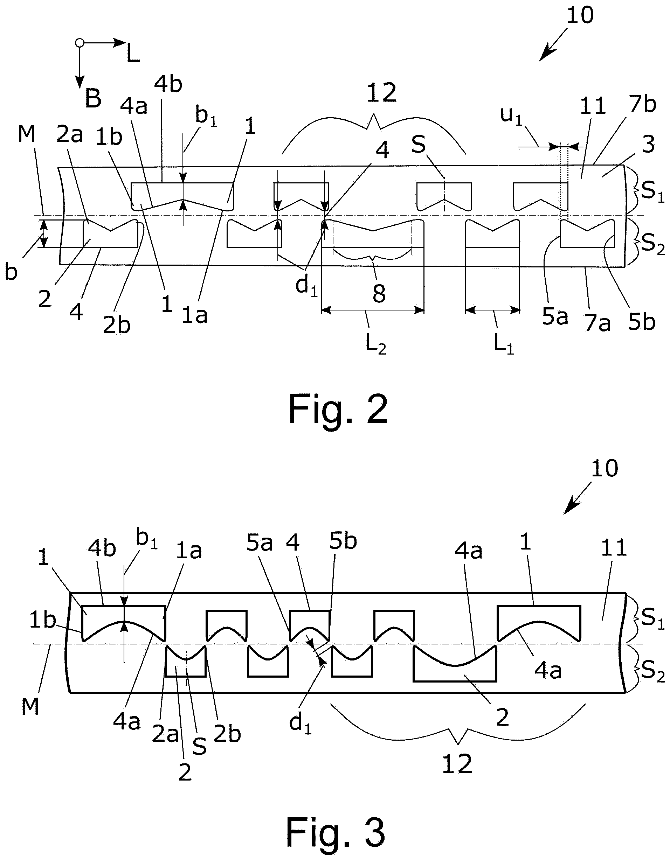

**Fig. 2** zeigt eine schematische Aufsicht auf eine erste bevorzugte Ausführungsform des erfindungsgemäßen Messbands 10. Das Messband 10 umfasst einen bandförmigen Grundkörper 11 aus ferromagnetischem Material, wie beispielsweise Stahl und weist vorzugsweise eine konstante Breite von 6 bis 25 mm, mehr bevorzugt von 8 bis 14 mm senkrecht zu einer Längserstreckungsrichtung L des Messbands 10 auf. Die Länge L des Messbands 10 ist an die jeweilige Länge des Aufzugschachts 41 angepasst. Das Messband 10 weist vorzugsweise keine Permanentmagnetisierung oder permanentmagnetisierte Bereiche, insbesondere zur Bereitstellung einer Positionskodierung, auf.

Das Messband 10 weist eine durch eine Mehrzahl an Ausbrüchen 1,2 bzw. Durchbrüchen im Messband 10 ausgebildete Positionskodierung 12 auf, welche mittels eines Magnetfeldsensors 21 einer dem Messband 10 zuordenbaren Sensoranordnung 20 auslesbar ist. Die Ausbrüche 1,2 sind hierbei vorzugsweise durch Stanzen oder Laserschneiden im Messbandgrundkörper 11 geformt und weisen somit vorzugsweise senkrecht zu einer Messbandoberfläche 3 verlaufende bzw. angeordnete Innenwände auf.

Die Positionskodierung 12 umfasst vorzugsweise beidseits einer Längsachse M in einer ersten und zweiten Spur S1, S2 angeordnete erste und zweite Ausbrüche 1,2. Die Längsachse M ist vorzugsweise eine zentral verlaufende Mittelachse des Messbands. Die jeweiligen Ausbrüche bilden dabei ein vordefiniertes Kodemarkenmuster im Grundkörper 11 aus, wobei insbesondere erste Ausbrüche 1 auf einer ersten Spur S1 von zweiten Ausbrüchen 2 in einer zweiten Spur S2 mittels eines zuordenbaren Magnetfeldsensors 21 magnetisch unterscheidbar sind. Die ersten und zweiten Ausbrüche 1,2 sind vorzugsweise in Längserstreckungsrichtung L des Grundkörpers 11 in einer vordefinierten Anordnung aufeinander folgend und/oder versetzt zueinander angeordnet und weiter bevorzugt um die Längsachse M alternierend angeordnet. Die Ausbrüche 1,2 können weiter vorteilhaft jeweils eine vordefinierte Erstreckung bzw. Länge in Längsrichtung aufweisen. Zur Ausbildung von Einzel- und Doppelbits der Positionskodierung können die jeweiligen ersten und/oder zweiten Ausbrüche 1,2 wenigsten eine erste Erstreckung bzw. Länge L₁ und eine zweite Erstreckung bzw. Länge L₂ aufweisen. Die zweite Längserstreckung L₂ kann hierbei für ein Doppelbit doppelt so lang sein wie die Längserstreckung L₁ für ein Einzelbit. Alternativ kann die Länge L₂ eines Doppelbits je nach Kodemarkenmusterausbildung etwas länger oder kürzer ausgebildet sein, als die zweifache Längserstreckung L₁ eines Einzelbits. Beispielsweise kann das Einzelbit eine Länge L₁ von 9 mm aufweisen und das Doppelbit eine Länge L₂ von 17 mm. Hierbei können die Bits eine Überlappung von vorliegend beispielsweise 1 mm aufweisen.

Erfindungsgemäß weisen die ersten und zweiten Ausbrüche 1, 2 eine, zwischen zwei der Längsachse M zugewandten Endabschnitten 1a,1b, 2a,2b der Ausbrüche 1,2, ausgebildete, konkav gebogene oder geknickte Innenkontur 4a auf. Im vorliegenden Ausführungsbeispiel gemäß Fig. 2 weisen die Ausbrüche 1,2 eine konkav geknickte Innenkontur 4a auf. Die Innenkontur 4a ist hierbei in einem zwischen den Endabschnitten 1a, 1b,2a,2b liegenden Mittelabschnitt 8 des jeweiligen Ausbruchs 1,2, weg von der Längsachse M zu einem Außenrand 7a,7b des Messbands 11 einfach geknickt bzw. gewinkelt ausgebildet.

Eine der Innenkontur 4a gegenüberliegende Außenkontur 4b verläuft im vorliegenden Ausführungsbeispiel parallel zur Längsachse M. Die äußeren Endabschnitte 1a, 1b,2a,2b umfassen jeweils senkrecht in Querrichtung B des Messbands 10 verlaufende Seitenwände 5a,5b.

Die Innen- und Außenkontur 4a,4b der einzelnen Ausbrüche 1,2 ist vorzugsweise spiegelsymmetrisch zu einer vorzugsweise zur Messbandquerrichtung B parallel angeordneten Symmetrieachse S der jeweiligen Ausbrüche 1,2 ausgebildet.

In Messbandlängsrichtung aufeinanderfolgende Ausbrüche 1,2 sind bevorzugt derart im Messbandgrundkörper 11 angeordnet, dass eine Distanz d1 zwischen sich an der Längsrichtung M gegenüberliegenden Endabschnitten 1a,1b,2a,2b der aufeinanderfolgenden Ausbrüche 1,2 geringer ist, als eine maximale Breite b bzw. Breitenerstreckung der jeweiligen Ausbrüche 1,2. Die jeweiligen Ausbrüche 1,2 weisen hierbei eine vorzugsweise gleiche maximale Breite b auf, unabhängig von deren Längserstreckung L1, L2 zur Ausbildung eines Einzel- oder Doppelbits der Positionskodierung 12.

Jeweils in Längsrichtung aufeinanderfolgende Ausbrüche 1,2 können in Seitenansicht bzw. in Messbandquerrichtung wenigstens teilweise um eine Strecke u1 überlappend angeordnet sein.

**Fig. 3** zeigt ein weiteres bevorzugtes Ausführungsbeispiel eines erfindungsgemäßen Messbands 10, in welchem die Innenkontur 4a zwischen zwei der Längssachse M zugewandten Endabschnitte 1a,1b,2a,2b konkav gebogen ausgebildet ist. Die gegenüberliegende Außenkontur 4b ist im Wesentlichen parallel zur Längsachse M verlaufend ausgebildet. Sich an der Längsachse M gegenüberliegende Endabschnitte 1a,2a,1b,2b bzw. die zugehörigen Seitenwände 5a,5b der Ausbrüche 1,2 liegen im gezeigten Ausführungsbeispiel auf einer Linie in Querrichtung des Messbands. Die Seitenwände bzw. die jeweils gegenüberliegenden Ausbrüche 1,2 können allerdings auch überlappend ausgebildet sein, analog zum Ausführungsbeispiel gemäß Fig. 2.

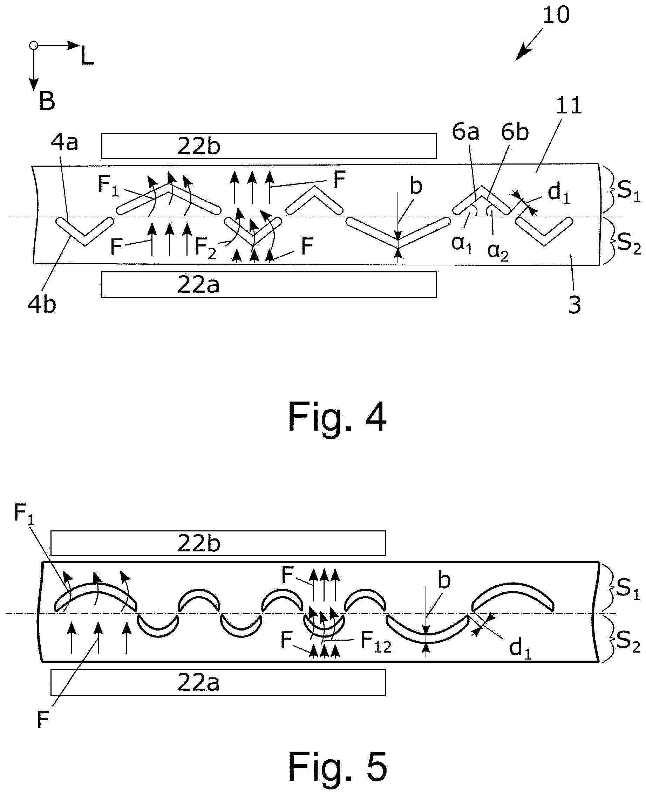

**Fig. 4** zeigt ein weiteres bevorzugtes Ausführungsbeispiel eines erfindungsgemäßen Messbands 10, in welchem die Innenkontur 4a zwischen zwei der Längsachse M zugewandten Endabschnitten 1a,1b,2a,2b konkav geknickt bzw. gewinkelt ausgebildet ist. Die Innenkontur 4a ist hierbei vorzugsweise derart ausgebildet, dass die geknickte Kontur bzw. deren Konturlinien 6a,6b bezüglich der Messbandlängsachse M in einem positiv oder negativen Winkel bzw. Steigungswinkel α₁,α₂ von weniger als 55°, mehr bevorzugt von weniger als 45° angeordnet sind bzw. verlaufen. Die Außenkontur 4b der jeweiligen Ausbrüche 1,2 ist hierbei vorzugsweise im Wesentlichen parallel zur Innenkontur 4a verlaufend ausgebildet.

**Fig. 5** zeigt ein weiteres bevorzugtes Ausführungsbeispiel des erfindungsgemäßen Messbands 10, in welchem die Innenkontur 4a zwischen zwei der Längsachse M zugewandten Endabschnitten 1a, 1b,2a,2b konkav gebogen ausgebildet ist. Analog zum Ausführungsbeispiel gemäß Fig. 4 ist die Außenkontur 4b im Wesentlichen parallel zur Innenkontur 4a verlaufend ausgebildet. Die jeweiligen Endabschnitte 1a,1b,2a,2b können hierbei eine konstante Breite und jeweils verrundete Enden aufweisen oder hin zu den Enden spitz zulaufend ausgebildet sein.

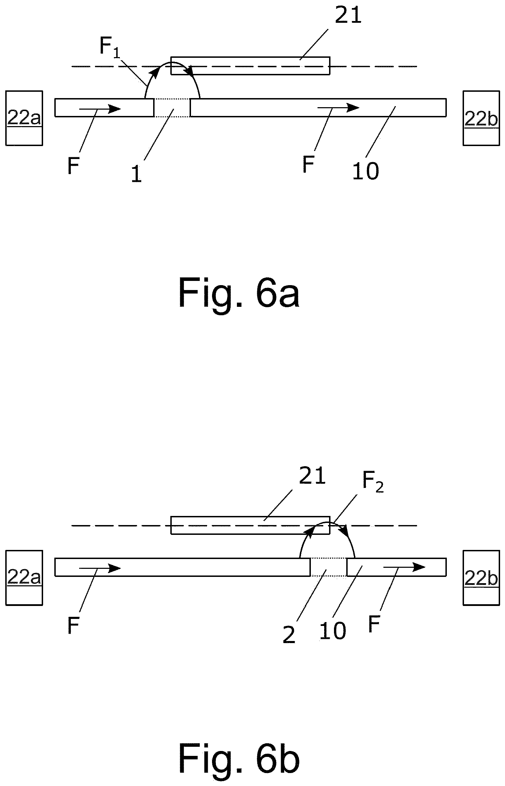

In den **Fig. 4,5** sind zur Erläuterung der Funktionsweise des Messbands 10 in Zusammenwirkung mit einer Sensoranordnung 20 nunmehr Magnetfelderzeugungsmittel 22a,22b dargestellt, welche vorzugsweise seitlich und insbesondere beidseits des Messbands 10 angeordnet sind. Die Magnetfelderzeugungsmittel 22a,22b liegen hierbei vorzugsweise seitlich und jeweils auf und/oder in einer Ebene mit dem Messband (vgl. auch Fig. 6a,6b). Die Magnetfelderzeugungsmittel sind vorzugsweise Permanentmagneten wie beispielsweise Stabmagneten, welche eine sich gegenüberliegende gegenseitige Polung aufweisen. Hierbei fließt ein Magnetfluss vom ersten Permanentmagneten 22a, aufweisend einen auf das Messband gerichteten Nordpol über das Messband 10 zum zweiten Permanentmagneten 22b, aufweisend einen auf das Messband gerichteten Südpol. Hierbei auftretende Feldlinienverläufe F, insbesondere ausbildend Feldliniensprünge F1,F2 über die Ausbrüche 1,2 sind schematisch als Pfeile teilweise dargestellt. Die Feldlinienverläufe F, F1, F2 werden hierbei nur an einigen Stellen des Messbands beispielhaft zu Erläuterungszwecken dargestellt.

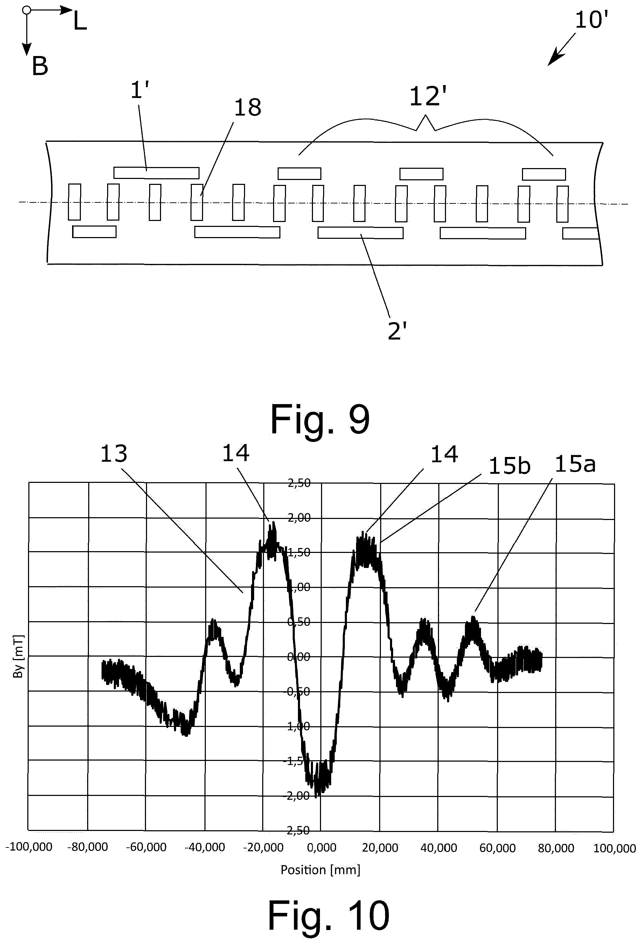

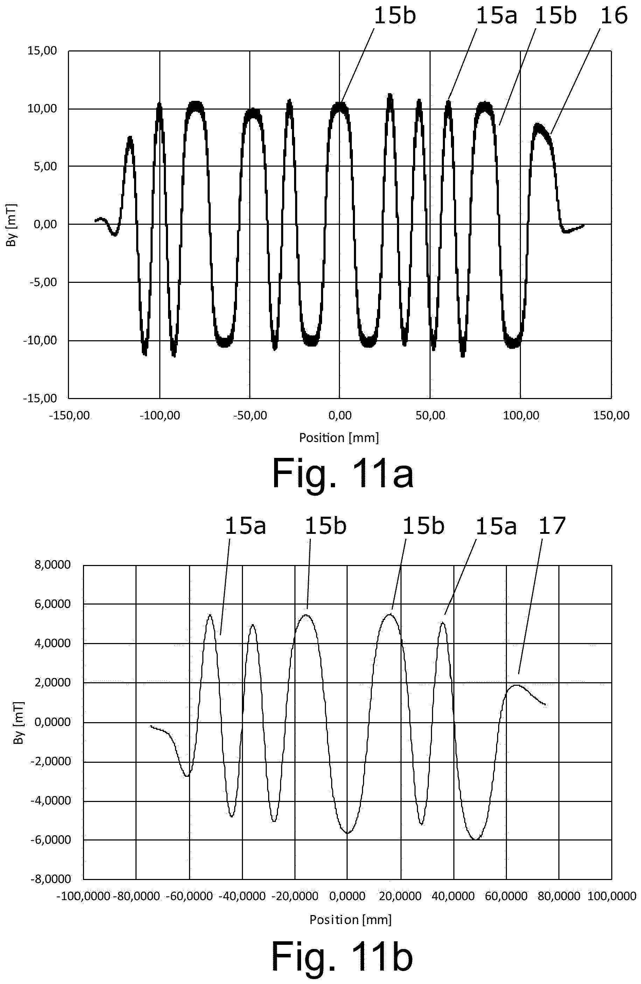

Durch die erfindungsgemäße Ausbildung werden optimierte Feldlinienverläufe durch das Messband 10 an und über die Ausbrüche 1,2 zur besseren Signalerfassung bei der Abtastung bzw. beim Auslesen der Positionskodierung 12 erzielt. Insbesondere wird hierbei zwischen den jeweiligen Ausbrüchen 1,2 ein ausreichend großer Widerstand im Messbandgrundkörper 11 bereitgestellt, welcher die Flussführung F1, F2 über die jeweiligen Ausbrüche 1,2 begünstigt und somit die Signalerfassung bzw. Abtastung verbessert. Durch die erfindungsgemäß geknickte oder gebogene Innenkontur wird eine zusätzliche Optimierung der Signalauswertung gegenüber der aus dem Stand der Technik bekannten linearen Innenkontur erreicht. Insbesondere kann durch die konkav gebogene oder geknickte Innenkontur eine Flusskonzentration in einem mittleren Bereich der Ausbrüche erzielt werden, wodurch eine präzisiere Signalauswertung erzielbar ist. Dies ermöglicht eine verbesserte Positionserfassung des Fahrkorbs und gleichzeitig eine Erhöhung der Toleranz für die Anordnung des Messband relativ zur Sensoranordnung aufgrund der optimierten Signalerfassung, siehe auch die nachfolgenden Erläuterungen zu den Signalauswertungen gemäß Fig. 10 und 11a,11b.

**Fig. 6a, 6b** zeigen eine Schnittansicht einer bevorzugten Ausführungsform des erfindungsgemäßen Messsystems beim Auslesen bzw. Abtasten der Positionskodierung 12 des Messbands 10. Das in die Zeichenebene zur Sensoranordnung 20 relativ beweglich angeordnete Messband 10 ist in Fig. 6a in einer ersten Position dargestellt, in welcher eine Erfassung von Feldliniensprünge F1 an den ersten Ausbrüchen 1 der ersten Spur S1 des Messbands erfolgt. Fig. 6b zeigt eine Schnittansicht in einer zweiten Relativposition, in welcher eine Erfassung von Feldliniensprünge F2 an den zweiten Ausbrüchen 2 der zweiten Spur S2 erfolgt. Der Magnetfeldsensor 21 der Sensoranordnung ist hierbei vorzugsweise parallel zur Messbandoberfläche 3 angeordnet bzw. liegt in einer Ebene, welche parallel zur Messbandoberfläche 3 verläuft. Der Magnetfeldsensor 21 ist bevorzugt weiterhin zentral über der Mittelachse M des Messbands 10 angeordnet. Aufgrund der am Magnetfeldsensor 21 detektierbaren Feldliniensprünge F1, F2 aufweisend insbesondere eine für die ersten und zweiten Ausbrüche 1,2 unterschiedliche ausgebildete Flussrichtung bezüglich des Magnetfeldsensors kann eine unterschiedliche Erfassung der ersten und zweiten Ausbrüche 1,2 durch den Magnetfeldsensor 21 erfolgen.

**Fig. 7a,7b** zeigen eine Sensoranordnung 20 zum Zusammenwirken mit dem Messband 10. Die Sensoranordnung 20 ist zur positionssicheren Anordnung an einem Fahrkorb 42 eines Aufzugsystems 40 ausgebildet und weist hierfür entsprechende Positioniermittel 20a auf, beispielsweise eine an sich bekannte Montagevorrichtung mit integrierten Verstellmitteln. Zur Einbindung der Sensoranordnung 20 in eine Aufzugssteuerung weist diese Anschlussmöglichkeiten 27a,27b auf.

Die Sensoranordnung 20 umfasst zudem eine längliche Ausnehmung 28, vorzugsweise auf einer Unterseite der Sensoranordnung, in welcher das Messband 10 vorzugsweise unterstützt durch ein entsprechendes Halteelement wie beispielsweise eine Führungsschiene 25 aufnehmbar bzw. einsetzbar ist. Ein in der Führungsschiene verlaufendes Messband 10 verläuft zwischen einer nach unten gerichtete Oberfläche 28a der Ausnehmung 28 und einer Führungsnut 25a der Führungsschiene 25 und ist somit sandwichartig zwischen den vorgenannten Komponenten angeordnet. Der entsprechende Abstand zwischen Oberfläche 28a und Führungsnut 25a ist vorzugsweise derart gewählt, dass das Messband 10 in der dadurch erzeugten Öffnung im Wesentlichen widerstandsfrei gleiten kann.

Auf der zum Messband 10 gerichteten Oberfläche 28a weist die Sensoranordnung 20 wenigstens einen Magnetfeldsensor 21 auf. Dieser umfasst vorzugsweise eine Mehrzahl von in Reihe angeordneter Hall-Sensoren 21a, 21b, 21c, welche zum Auslesen des Messbands 10 ausgebildet sind und parallel zu einer Verlaufsrichtung bzw. zur Längserstreckungsrichtung L des Messbands 10 ausgerichtet sind.

**Fig. 8** zeigt eine zugehörige Schnittansicht des erfindungsgemäßen Messsystems 30 aufweisend eine Sensoranordnung 20 und das darin eingelegte Messband 10.

Die jeweiligen Magnetfelderzeugungsmittel 22a,22b können hierbei seitlich des Messbands 10 im Gehäuse 50 der Sensoranordnung 20 angeordnet sein. Alternativ können diese wie in Fig. 8 dargestellt in Seitenwangen der Führungsschiene 25 angeordnet sein.

**Fig. 9** zeigt ein Messband 10' aus dem Stand der Technik aufweisend parallel zur Messbandlängsrichtung ausgerichtete Ausbrüche 1',2' unterschiedlicher Länge zur Ausbildung von Einzel- und Doppelbits einer Positionskodierung 12'. Weiterhin weist das Messband 10' senkrecht zur Messbandlängsrichtung ausgerichtete und regelmäßige bzw. in konstantem Abstand zueinander angeordnete Ausbrüche 18 im Messbandgrundkörper auf. Diese sind unter anderem auch zwischen benachbarten Ausbrüchen 1',1' angeordnet.

**Fig. 10** zeigt eine Signalauswertung durch einen Magnetfeldsensor bei der Abtastung des Messbands 10' aus dem Stand der Technik gemäß Fig. 9. Der gezeigte Graph stellt dabei ein Messsignal 13 eines Hall-Sensors beim Abtasten der Positionskodierung 12' in Messbandlängsrichtung dar. Wie dem Graph entnehmbar ist, weist die Positionskodierung 12' vor allem an den Scheitelpunkten, welche jeweils in einem zentralen Bereich der jeweiligen Ausbrüche 1',2' erfasst werden einen teilweisen Signalverlust auf, welcher sich durch deutlich sichtbare Sprünge 14 im Messsignal zeigt. Dies führt dazu, dass keine präzise Positionserfassung durch die Sensoranordnung insbesondere in diesen Bereichen erfolgen kann.

Weiterhin ist ersichtlich, dass das erfassbare Messsignal bei Einzelbits 15a und Doppelbits 15b darstellenden Ausbrüchen 1',2' stark unterschiedlich hinsichtlich der Signalstärke bzw. den Amplituden ausgebildet ist. Dies führt neben einer weniger optimalen Signalerfassung dazu, dass eine relativ geringe Toleranz hinsichtlich der Ausrichtung von Messband und Sensoranordnung erzielbar ist. Insbesondere muss für eine hinreichend zuverlässige Signalerfassung des Messsignals von Einzel- und Doppelbits das Messband sehr nah und präzise zur Sensoranordnung ausgerichtet sein, was nur mit einem deutlichen Mehraufwand in der Anordnung und Wartung des Messsystems erzielbar ist.

**Fig. 11a, 11b** zeigen eine jeweilige Signalauswertung durch einen Magnetfeldsensor 21 bei der Abtastung des erfindungsgemäßen Messbands 10, beispielhaft gemäß den bevorzugten Ausbildungen nach Fig. 2 und Fig. 5. Analog zur Fig. 10 stellt der jeweilige Graph 16, 17 dabei ein Messsignal 13 eines Hall-Sensors beim Abtasten der erfindungsgemäßen Positionskodierung 12 in Messbandlängsrichtung dar. Wie den Graphen 16,17 entnehmbar ist, wird durch die erfindungsgemäße Ausbildung des Messbands eine deutlich optimierte Signalerfassung ermöglicht. Insbesondere wird eine deutlich gleichmäßigere Signalausbildung in den Scheitelpunkten mit erhöhten Amplituden erzielt. Zudem bilden die jeweiligen Einzel- und Doppelbits 15a, 15b darstellenden Ausbrüche 1,2 ein annähernd gleich starkes Signal bzw. gleich starke Amplituden aus. Hierdurch kann eine deutlich präzisere Positionserfassung durch die Sensoranordnung sowie eine gesteigerte Toleranz hinsichtlich der Ausrichtung bzw. Anordnung von Messband und Sensorvorrichtung erzielt werden.

### Bezugszeichenliste

- 1,2: Ausbrüche
- 1a,1b: Endabschnitte erster Ausbrüche
- 2a,2b: Endabschnitte zweite Ausbrüche
- 3: Messbandoberfläche
- 4: Kontur Ausbruch
- 4a: Innenkontur
- 4b: Außenkontur
- 5a,b: Seitenwände
- 6a,6b: Konturlinien
- 8: Mittelabschnitt
- 10: Messband
- 11: Grundkörper
- 12: Positionskodierung
- 13: Messsignal Ausbildung Stand der Technik
- 14: Sprünge/Signalverlust
- 15a,15b: Signal Einzel-, Doppelbit
- 16,17: Messsignal erfindungsgemäße Ausbildung Messband
- 18: senkrechte Ausbrüche im Stand der Technik
- 20: Sensoranordnung
- 21: Magnetfeldsensor
- 21a,b,c: Hall-Sensoren
- 22a,22b: Magnetfelderzeugungsmittel
- 25: Führungsschiene
- 25a: Führungsnut
- 27a,27b: Anschlussmöglichkeiten
- 28: Ausnehmung Sensoranordnung
- 28a: Oberfläche Ausnehmung
- 40: Aufzugssystem
- 41: Aufzugsschacht
- 42: Fahrkorb
- 43a-d: Stockwerke
- 44a, 44b: Befestigungsmittel
- 50: Gehäuse
- F: Feldlinienverläufe
- F₁,F₂: Feldliniensprünge
- M: Längsachse Messband
- L: Längserstreckungsrichtung Messband
- L₁,L₂: Länge Einzel- und Doppelbits Positiondskodierung
- B: Querrichtung Messband
- S₁,S₂: erste, zweite Spur
- d1: Distanz zwischen Endabschnitten benachbarter Ausbrüche
- b1: Breite eines Ausbruchs
- u1: Überlappung
- α₁,α₂: Winkel

## Patentansprüche

1. Messband (10) zur Bestimmung der Position eines Fahrkorbs (42) in einem Aufzugschacht (41), welches vertikal im Aufzugschacht und vorzugsweise sich über wenigstens zwei Gebäudestockwerke (43a,43b,43c,43d) erstreckend anordenbar ist, aufweisend einen bandförmigen Grundkörper (11) aus ferromagnetischem Material und eine darin eingebrachte und mittels eines Magnetfeldsensors auslesbare Positionskodierung (12), wobei die Positionskodierung durch beidseits einer Längsachse (M) des Messbands (11), vorzugsweise alternierend angeordnete und im Wesentlichen in Messbandlängsrichtung (L) verlaufende Ausbrüche (1,2) im Messbandgrundkörper (11) gebildet ist, **dadurch gekennzeichnet, dass** die jeweiligen Ausbrüche (1,2) eine, zwischen zwei der Längsachse (M) zugewandten Endabschnitten (1a,1b,2a,2b) der Ausbrüche (1,2) ausgebildete, konkav gebogene oder geknickte Innenkontur (4a) aufweisen.

2. Messband nach Anspruch 1, **dadurch gekennzeichnet, dass** jeweils in Messbandlängsrichtung (L) aufeinanderfolgende Ausbrüche (1,2) derart im Messbandgrundkörper (11) angeordnet sind, dass eine Distanz (d₁) zwischen sich gegenüberliegenden Endabschnitten (1a,2a,1b,2b) der aufeinanderfolgenden Ausbrüche (1,2) geringer ist, als eine maximale Breite (b) der jeweiligen Ausbrüche (1,2) in Messbandquerrichtung (B).

3. Messband nach Anspruch 1 oder 2, **dadurch gekennzeichnet, dass** jeweils in Messbandlängsrichtung (L) aufeinanderfolgende Ausbrüche (1,2) auf gegenüberliegenden Seiten der Längsachse (M) und/oder zueinander in Längsrichtung (L) versetzt angeordnet sind.

4. Messband nach einem der Ansprüche 1 bis 3, **dadurch gekennzeichnet, dass** jeweils in Messbandlängsrichtung (L) aufeinanderfolgende Ausbrüche (1,2) derart angeordnet sind, dass sich gegenüberliegende Endabschnitte (1a,2a,1b,2b) der aufeinanderfolgenden Ausbrüche (1,2) in Messbandquerrichtung (B) wenigstens teilweise überlappen.

5. Messband nach einem der Ansprüche 1 bis 4, **dadurch gekennzeichnet, dass** die Innenkontur (4a) in einem zwischen den Endabschnitten liegenden Mittelabschnitt (8) weg von der Längsachse (M) zu einem Außenrand (7a,7b) des Messbands (11) gebogen oder geknickt ausgebildet ist.

6. Messband nach einem der vorhergehenden Ansprüche, **dadurch gekennzeichnet, dass** die jeweilige Innenkontur (4a) eine Verjüngung einer Breite (b) des jeweiligen Ausbruchs (1,2) ausbildet.

7. Messband nach einem der vorhergehenden Ansprüche, **dadurch gekennzeichnet, dass** die jeweiligen Ausbrüche (1,2) eine zwischen den zwei Endabschnitten (1a,1b,2a,2b) der Ausbrüche (1,2) ausgebildete und einem Messbandaußenrand (7a,7b) zugewandte Außenkontur (4b) aufweisen, welche im Wesentlichen parallel zur Innenkontur (4a) oder parallel zur Messbandlängsachse (M) ausgebildet ist.

8. Messband nach einem der vorhergehenden Ansprüche, **dadurch gekennzeichnet, dass** die jeweiligen Ausbrüche (1,2) eine Kontur (4) aufweisen, welche spiegelsymmetrisch zu einer vorzugsweise zur Messbandquerrichtung (B) parallel angeordneten Symmetrieachse (S) der jeweiligen Ausbrüche (1,2) ausgebildet ist.

9. Messband nach einem der vorhergehenden Ansprüche, **dadurch gekennzeichnet, dass** die Positionskodierung (12) mehrere erste und zweite Ausbrüche (1,2) umfasst, welche eine gleichartige geometrische Grundkontur (4) aufweisen und welche sich lediglich in Ihrer Länge (L₁,L₂) in Messbandlängsrichtung (L) zur Ausbildung eines Einzel- oder Doppelbits der Positionskodierung (12) unterscheiden.

10. Messband nach einem der vorhergehenden Ansprüche, **dadurch gekennzeichnet, dass** das Messband (10) außer den die Positionskodierung (12) bildenden Ausbrüchen (1,2) keine zusätzlichen Ausbrüche oder Öffnungen, insbesondere zwischen jeweils zwei in Messbandlängsrichtung (L) aufeinanderfolgenden Ausbrüchen (1,2) aufweist.

11. Messband nach einem der vorhergehenden Ansprüche, **dadurch gekennzeichnet, dass** die Positionskodierung (12) derart ausgebildet ist, dass diese bei externer Anregung mittels eines oder mehrerer vorzugsweise seitlich des Messbands (10) angeordneten Magnetfelderzeugungsmittel (22a,22b) ein temporäres und durch den Magnetfeldsensor (21) auslesbares Magnetfeld ausbildet.

12. Messband nach einem der vorhergehenden Ansprüche, **dadurch gekennzeichnet, dass** der bandförmige Grundkörper (11) aus ferromagnetischem Material, insbesondere Stahl, gebildet ist und frei von permanentmagnetisierten Bereichen ist.

13. Messsystem (30) aufweisend ein Messband (10) nach einem der vorhergehenden Ansprüche und eine relativ zum Messband bewegliche Sensoranordnung (20) zum Auslesen der Positionskodierung (12) des Messbands mittels wenigstens eines Magnetfeldsensors (21), wobei die Sensoranordnung (20) vorzugsweise seitlich des Messbands (10) angeordnete Magnetfelderzeugungsmittel (22a,22b) zur temporären Magnetisierung des Messbands (10) aufweist, und wobei der Magnetfeldsensor (21) zum Auslesen des dabei erzeugten temporären Magnetfelds (24a,24b) ausgebildet ist.

14. Messsystem nach Anspruch 13, **dadurch gekennzeichnet, dass** das Messsystem beidseits des Messbands angeordnete Permanentmagneten (22a,22b) unterschiedlicher Polung als Magnetfelderzeugungsmittel aufweist, und/oder dass der Magnetfeldsensor (21) wenigstens einen, vorzugsweise eine Mehrzahl von in Reihe angeordneter Hall-Sensoren aufweist, welche parallel zur Längserstreckungsrichtung (L) des Messbands (10) angeordnet sind.

15. Aufzugsystem (40) mit einem Aufzugschacht (41) und einen darin verfahrbar angeordneten Fahrkorb (42), welches ein Messsytem (30) zur Bestimmung der Position des Fahrkorbs (42) im Aufzugschacht (41) gemäß einem der Ansprüche 13 oder 14 aufweist.

## Claims

1. A measuring tape (10) for determining the position of an elevator car (42) in an elevator shaft (41), said measuring tape (10) being vertically disposable in the elevator shaft and preferably being disposable so as to extend across at least two building floors (43a, 43b, 43c, 43d), said measuring tape (10) having a tape-shaped base body (11) made of ferromagnetic material and a position coding (12) incorporated therein and capable of being read out by means of a magnetic field sensor, the position coding being realized by cutouts (1, 2) in the base body (11) of the measuring tape, said cutouts (1, 2) being disposed, preferably alternatingly, on both sides of a longitudinal axis (M) of the measuring tape (11) and running essentially in the longitudinal direction (L) of the measuring tape, **characterized in that** the respective cutouts (1, 2) have a concavely curved or bent inner contour (4a) realized between two end sections (1a, 1b, 2a, 2b) facing the longitudinal axis (M).

2. The measuring tape according to claim 1, **characterized in that** cutouts (1, 2) which are each consecutive in the longitudinal direction (L) of the measuring tape are disposed in such a manner in the base body (11) of the measuring tape that a distance (d₁) between opposite end sections (1a, 2a, 1b, 2b) of the consecutive cutouts (1, 2) is smaller than a maximum width (b) of the respective cutouts (1, 2) in the transverse direction (B) of the measuring tape.

3. The measuring tape according to claim 1 or 2, **characterized in that** cutouts (1, 2) which are each consecutive in the longitudinal direction (L) of the measuring tape are disposed on opposite sides of the longitudinal axis (M) and/or so as to be offset with respect to each other in the longitudinal direction (L).

4. The measuring tape according to any one of claims 1 to 3, **characterized in that** cutouts (1, 2) which are each consecutive in the longitudinal direction (L) of the measuring tape are disposed in such a manner that opposite end sections (1a, 2a, 1b, 2b) of the consecutive cutouts (1, 2) at least partially overlap in the transverse direction (B) of the measuring tape.

5. The measuring tape according to any one of claims 1 to 4, **characterized in that** the inner contour (4a) is curved or bent away from the longitudinal axis (M) toward an outer edge (7a, 7b) of the measuring tape (11) in a middle section (8) situated between the end sections.

6. The measuring tape according to any one of the preceding claims, **characterized in that** the respective inner contour (4a) realizes a tapering of a width (b) of the respective cutout (1, 2).

7. The measuring tape according to any one of the preceding claims, **characterized in that** the respective cutouts (1, 2) have an outer contour (4b) which is realized between the two end sections (1a, 1b, 2a, 2b) of the cutouts (1, 2) and faces an outer edge (7a, 7b) of the measuring tape and which is essentially parallel to the inner contour (4a) or parallel to the longitudinal axis (M) of the measuring tape.

8. The measuring tape according to any one of the preceding claims, **characterized in that** the respective cutouts (1, 2) have a contour (4) which is mirror-symmetrical to a symmetry axis (S) of the respective cutouts (1, 2), said symmetry axis (S) being disposed parallel preferably to the transverse direction (B) of the measuring tape.

9. The measuring tape according to any one of the preceding claims, **characterized in that** the position coding (12) comprises several first and second cutouts (1, 2) having a geometric basic contour (4) of the same kind and differing merely in their length (L₁, L₂) in the longitudinal direction (L) of the measuring tape in order to realized single and double bits of the position coding (12).

10. The measuring tape according to any one of the preceding claims, **characterized in that** the measuring tape (10) has no additional cutouts or openings, in particular between each two cutouts (1, 2) which are consecutive in the longitudinal direction (L) of the measuring tape, apart from the cutouts (1, 2) realizing the position coding (12).

11. The measuring tape according to any one of the preceding claims, **characterized in that** the position coding (12) is realized in such a manner that it produces a magnetic field which is temporary and capable of being read out by means of the magnetic field sensor (21) when being externally excited by means of one or several magnetic field generating element(s) (22a, 22b) which is/are disposed preferably laterally to the measuring tape (10).

12. The measuring tape according to any one of the preceding claims, **characterized in that** the tape shape-shaped base body (11) is made of ferromagnetic material, in particular steel, and is free from permanently magnetized areas.

13. A measuring system (30) having a measuring tape (10) according to any one of the preceding claims and a sensor arrangement (20) which is movable relative to the measuring tape and which serves to read out the position coding (12) of the measuring tape by means of at least one magnetic field sensor (21), wherein the sensor arrangement (20) has magnetic field generating elements (22a, 22b) which are preferably disposed laterally to the measuring tape (10) and which serve to temporarily magnetize the measuring tape (10), and wherein the magnetic field sensor (21) is realized for reading out the temporary magnetic field (24a, 24b) generated in this process.

14. The measuring system according to claim 13, **characterized in that** the measuring system has permanent magnets (22a, 22b) as magnetic field generating elements, said permanent magnets (22a, 22b) being of different polarity and being disposed on both sides of the measuring tape, and/or **in that** the magnetic field sensor (21) has at least one Hall sensor, preferably a majority of Hall sensors which are disposed in a row and which are disposed parallel to the longitudinal dimension direction (L) of the measuring tape (10).

15. An elevator system (40) having an elevator shaft (41) and an elevator car (42) movably disposed therein, said elevator system (40) having a measuring system (30) for determining the position of the elevator car (42) in the elevator shaft (41) according to any one of claims 13 or 14.

## Revendications

1. Ruban à mesurer (10) pour déterminer la position d'une cabine (42) dans une cage d'ascenseur (41), ledit ruban à mesurer (10) étant capable d'être disposé verticalement dans la cage d'ascenseur et, de préférence, capable d'être disposé de manière à s'étendre sur au moins deux étages (43a, 43b, 43c, 43d) d'un bâtiment, ledit ruban à mesurer (10) ayant un corps de base (11) en forme de ruban et fait de matériau ferromagnétique et un codage de position (12) incorporé dans celui-ci et capable d'être lu au moyen d'un capteur de champ magnétique, le codage de position étant réalisé par des échancrures (1, 2) dans le corps de base (11) du ruban à mesurer, lesdites échancrures (1, 2) étant disposées, de préférence de manière alternée, des deux côtés d'un axe longitudinal (M) du ruban à mesurer (11) et s'étendant essentiellement dans la direction longitudinale (L) du ruban à mesurer, **caractérisé en ce que** les échancrures (1, 2) respectives ont un contour intérieur (4a) qui est courbé de manière concave et plié et qui est réalisé entre deux parties d'extrémité (1a, 1b, 2a, 2b) orientées vers l'axe longitudinal (M)

2. Ruban à mesurer selon la revendication 1, **caractérisé en ce que** des échancrures (1, 2) qui sont successives dans la direction longitudinale (L) du ruban à mesurer sont disposées de telle manière dans le corps de base (11) du ruban à mesurer qu'une distance (d₁) entre des parties d'extrémité (1a, 2a, 1b, 2b) opposées des échancrures (1, 2) successives est inférieure à une largeur maximale (b) des échancrures (1, 2) respectives dans la direction transversale (B) du ruban à mesurer.

3. Ruban à mesurer selon la revendication 1 ou 2, **caractérisé en ce que** des échancrures (1, 2) qui sont successives dans la direction longitudinale (L) du ruban à mesurer sont disposées sur des côtés opposés de l'axe longitudinal (M) et/ou de manière à être décalées les unes par rapport aux autres dans la direction longitudinale (L).

4. Ruban à mesurer selon l'une quelconque des revendications 1 à 3, **caractérisé en ce que** des échancrures (1, 2) qui sont successives dans la direction longitudinale (L) du ruban à mesurer sont disposées de telle manière que des parties d'extrémité (1a, 2a, 1b, 2b) opposées des échancrures (1, 2) successives se chevauchent au moins partiellement dans la direction transversale (B) du ruban à mesurer.

5. Ruban à mesurer selon l'une quelconque des revendications 1 à 4, **caractérisé en ce que** le contour intérieur (4a) est courbé ou plié en s'éloignant de l'axe longitudinal (M) vers un bord extérieur (7a, 7b) du ruban à mesurer (11) dans une partie centrale (8) située entre les parties d'extrémité.

6. Ruban à mesurer selon l'une quelconque des revendications précédentes, **caractérisé en ce que** le contour intérieur (4a) réalise un effilement d'une largeur (b) de l'échancrure (1, 2) respective.

7. Ruban à mesurer selon l'une quelconque des revendications précédentes, **caractérisé en ce que** les échancrures (1, 2) respectives ont un contour extérieur (4b) qui est réalisé entre les deux parties d'extrémité (1a, 1b, 2a, 2b) des échancrures (1, 2) et est orienté vers un bord extérieur (7a, 7b) du ruban à mesurer et qui est essentiellement parallèle par rapport au contour intérieur (4a) ou parallèle par rapport à l'axe longitudinal (M) du ruban à mesurer.

8. Ruban à mesurer selon l'une quelconque des revendications précédentes, **caractérisé en ce que** les échancrures (1, 2) respectives ont un contour (4) qui présente une symétrie spéculaire par rapport à un axe de symétrie (S) des échancrures (1, 2) respectives qui est disposé parallèlement, de préférence à une direction transversale (B) du ruban à mesurer.

9. Ruban à mesurer selon l'une quelconque des revendications précédentes, **caractérisé en ce que** le codage de position (12) comprend plusieurs premières et deuxièmes échancrures (1, 2) qui ont un contour de base (4) géométrique de même sorte et qui se distinguent seulement dans leur longueur (L₁, L₂) dans la direction longitudinale (L) du ruban à mesurer pour réaliser un seul bit ou un double bit du codage de position (12).

10. Ruban à mesurer selon l'une quelconque des revendications précédentes, **caractérisé en ce que** le ruban à mesurer (10) n'a aucune échancrure ou ouverture additionnelles, notamment entre toujours deux échancrures (1, 2) qui sont successives dans la direction longitudinale (L) du ruban à mesurer, à part des échancrures (1, 2) réalisant le codage de position (12).

11. Ruban à mesurer selon l'une quelconque des revendications précédentes, **caractérisé en ce que** le codage de position (12) est réalisé de telle manière qu'il produit un champ magnétique qui est temporaire et capable d'être lu par un capteur (21) de champ magnétique lors d'une excitation externe au moyen d'un ou de plusieurs moyen(s) (22a, 22b) de génération de champs magnétiques disposé(s), de préférence, du côté du ruban à mesurer (10).

12. Ruban à mesurer selon l'une quelconque des revendications précédentes, **caractérisé en ce que** le corps de base (11) en forme de ruban est fait de matériau ferromagnétique, notamment d'acier, et est libre de zones magnétisées en permanence.

13. Système de mesure (30) ayant un ruban à mesurer (10) selon l'une quelconque des revendications précédentes et un agencement de capteur (20) qui est mobile par rapport au ruban à mesurer et sert à lire le codage de position (12) du ruban à mesurer au moyen d'au moins un capteur (21) de champ magnétique, dans lequel l'agencement de capteur (20) a des moyens (22a, 22b) de génération de champs magnétiques qui sont disposés, de préférence, du côté du ruban à mesurer (10) et qui servent à magnétiser temporairement le ruban à mesurer (10), et dans lequel le capteur (21) de champ magnétique est configuré pour lire le champ magnétique (24a, 24b) temporaire généré dans ce processus.

14. Système de mesure selon la revendication 13, **caractérisé en ce que** le système de mesure a des aimants permanents (22a, 22b) comme moyens de génération de champs magnétiques, lesdits aimants permanents (22a, 22b) ayant une polarité différente et étant, de préférence, disposés des deux côtés du ruban à mesurer, et/ou **en ce que** le capteur (21) de champ magnétique a au moins un capteur à effet Hall, de préférence une majorité de capteurs à effet Hall disposés en série et disposés parallèlement à la direction (L) de la dimension longitudinale du ruban à mesurer (10).

15. Système d'ascenseur (40) ayant une cage d'ascenseur (41) et une cabine (42) disposée de manière mobile dans celle-ci, ledit système d'ascenseur ayant un système de mesure (30) pour déterminer la position de la cabine (42) dans la cage d'ascenseur (41) selon l'une quelconque des revendications 13 ou 14.
